Europäisches Patentamt

European Patent Office

Office européen des brevets

(11) Publication number: **0 104 634**
**B1**

(12) **EUROPEAN PATENT SPECIFICATION**

(45) Date of publication of patent specification: **06.08.86**

(21) Application number: **83109533.6**

(22) Date of filing: **24.09.83**

(51) Int. Cl.⁴: **G 02 F 1/33,** G 02 B 6/12,
G 02 F 1/11

(54) Integrated optic device.

(30) Priority: **29.09.82 GB 8227749**

(43) Date of publication of application:
**04.04.84 Bulletin 84/14**

(45) Publication of the grant of the patent:
**06.08.86 Bulletin 86/32**

(84) Designated Contracting States:
**DE FR SE**

(56) References cited:
EP-A-0 062 103
DE-A-3 102 972
US-A-3 701 583
US-A-3 730 609
US-A-4 040 722
US-A-4 272 825

ELEKTRONIK, vol. 19, September 24th, 1982
"Thermisch gesteuerter Schalter für
Lichtwellenleiter" page 28

(73) Proprietor: **International Standard Electric
Corporation**
**320 Park Avenue**
**New York New York 10022 (US)**

(72) Inventor: **Moroz, John**
**54 Clarkhill**
**Harlow/Essex (GB)**

(74) Representative: **Schmidt, Werner, Dipl.-Phys.
et al**
**c/o Standard Elektrik Lorenz AG Patent- und
Lizenzwesen Kurze Strasse 8 Postfach 300 929
D-7000 Stuttgart 30 (DE)**

Courier Press, Leamington Spa, England.

## Description

This invention relates to integrated optic devices and in particular to the control of their optical throughput, and to their use in information transfer apparatus.

DE—A—3 102 972 discloses a scanner containing an optic device in which a light beam is coupled into an optical waveguide through a prism coupler. Also provided are transducers which produce acoustic surface waves approximately perpendicular to the light path. To maintain the portion of light coupled into the optical waveguide constant during operation, the light-incidence angle must always be kept at its optimum value.

Embodiments of the invention will now be described with reference to the accompanying drawings, in which:

Fig. 1 shows, schematically, prism coupling of light into a waveguide of an integrated optic device;

Fig. 2 shows, schematically, grating coupling of light into a waveguide of an integrated optic device;

Fig. 3 shows, schematically, an electronic feedback loop for use in automatically controlling the optical throughput of such an integrated optic device, and

Fig. 4 shows, schematically, an alternative electronic control system.

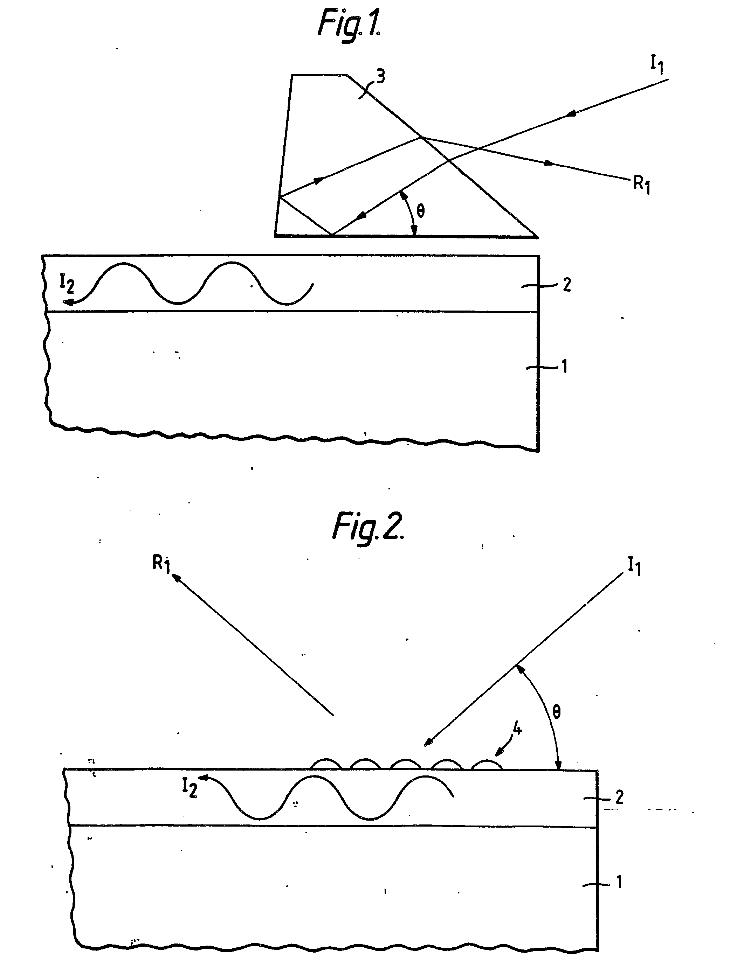

An integrated optic device basically comprises a substrate 1 (Fig. 1), typically lithium niobate (LiNbO$_3$), having a surface layer 2 of a higher refractive index than the substrate 1. The surface layer 2 is produced by diffusion or ion implantation techniques and may comprise a planar (as shown), or channel, optical waveguide for an optical beam coupled thereinto. Two common techniques for coupling light into such waveguides comprise prism coupling (Fig. 1) and grating coupling (Fig. 2). Fig. 1 shows a prism 3. Of the input optical power I$_1$, a portion I$_2$ is coupled into the waveguide comprised by layer 2 and a portion R$_1$ is reflected. In order for light to be most efficiently coupled to the waveguide it must be incident at a specific angle θ. The exact value of this angle θ depends on a number of parameters including waveguide refractive index, waveguide depth, optical wavelength and prism refractive index or in the case of grating coupling, the grating being illustrated schematically at 4 in Fig. 2, the grating period. The fraction of the incident energy coupled into the waveguide is critically dependent on the angle θ. Conventionally the beam coupling angle and the beam angle of incidence are controlled mechanically by very high accuracy mechanical fabrication and adjustment of prism coupling or grating coupling, and of the support structures of the integrated optic device and light source. However, this approach is expensive and does not readily lend itself to dynamic electronic control of the otpical throughput of the device.

The present invention is based on the recognition that the angle θ is also dependent on temperature, due to the temperature dependence of the related paramenters such as the refractive indices of the prism and the waveguide. This allows the fine adjustment required to control the optical input I$_2$ into the waveguide to be achieved relatively inexpensively by correspondingly controlling the temperature of the integrated optic device. For some applications a 10 degree temperature range with 0.2 degree increments would be adequate. This may readily be achieved by, for example, mounting the integrated optic device to a thermoelectric heat pump, which would give an additional benefit of small size. Alternatively this may be achieved by resistive heating and air cooling.

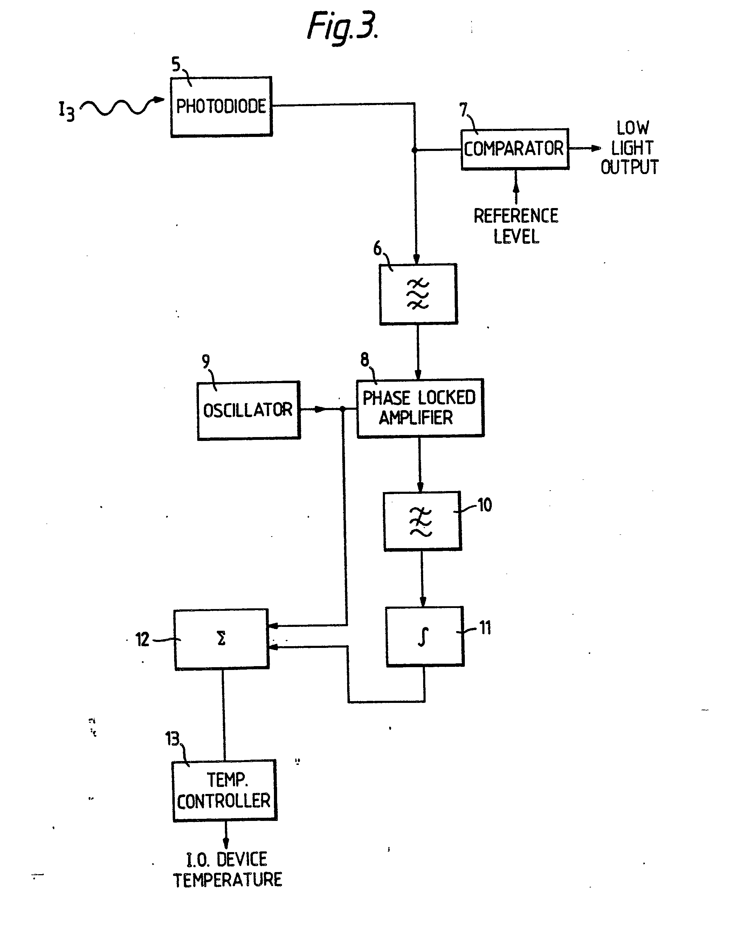

The technique of controlling θ, and thus the optical power I$_2$, by controlling the temperature of the integrated optic device readily lends itself to dynamic electronic control, although manual control may be employed. In order to maximise I$_2$, the reflected optical power R$_1$, may be monitored by, for example, a photodiode, or alternatively light I$_3$, whose intensity is proportional to that of I$_2$, may be drawn from I$_2$ by some convenient means of output coupling and monitored with a photodiode. Then by means of electronic feedback loop of the optical power I$_2$ may be maximised by varying the temperature of the integrated optic device to minimise R$_1$, or maximise I$_3$, respectively. One such electronic feedback loop is illustrated schematically in Fig. 3 and employs light I$_3$ detected by a photodiode 5. The temperature of the integrated optic device (not shown) is caused to vary by a small amount at a known frequency derived from an oscillator 9. Variations in I$_2$ at this frequency are detected by monitoring I$_3$, or R$_1$, by photodiode 5, and are distinguished from other signals or noise by a bandpass amplifier 6, a phase-locked amplifier 8 and a low pass amplifier 10, which together effectively act as a narrow bandpass filter at the oscillator frequency. The output of amplifier 10 is a low frequency signal whose sign (positive or negative) indicates whether the temperature is above or below a temperature T$_m$ required for maximum I$_2$, and whose amplitude decreases as the temperature approaches T$_m$. The output of amplifier 10 is fed into an integrator 11 whose output will vary due to the input from amplifier 10 but which will settle down as the temperature approaches T$_m$. The output of integrator 11 provides the voltage level about which the oscillator level varies since the two are added in a summing amplifier 12. This voltage signal is then translated into temperature by a temperature controller 13 for the thermoelectric heat pump (not shown). The output of photodiode 5 is also applied to a comparator 7 by means of which it is compared with a reference level to provide a low light output indication. That is, to detect when insufficient light is falling on the photodiode and to warn of that situation. The electronic feedback could be implemented using either microprocessor control or using a combination of analogue and digital integrated circuits.

When designing such a system the phase of the signals at various points will need to be taken into consideration.

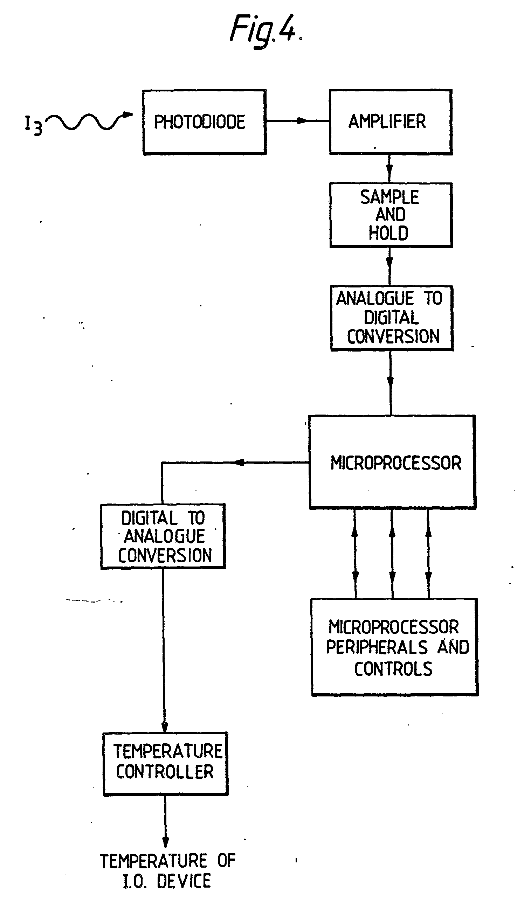

An alternative electronic approach is to use a system which scans through a range of temperatures, measuring $I_2$ at each temperature (via $R_1$, or $I_3$), and then selects the temperature which gives a desired value of $I_2$. The advantage of this approach is that the value of $I_2$ chosen need not be a maximum. A disadvantage is that the electronics required are more complex. A block diagram of a possible system is shown in Fig. 4.

This dynamic control facility is particularly useful in view of the fact that both gas and solid state lasers have output optical beams, which may be employed as integrated optic device light sources, that can change in direction, intensity and wavelength with time. In addition, the optical wavelength emitted by solid state lasers is temperature sensitive. This will effect the optimum coupling angle $\theta$ and so must be corrected for by either controlling the laser temperature or the integrated optic device temperature.

It is thus envisaged that the present invention may be employed with either "manual" or electronic temperature control. The input direction of the optical beam is approximately set mechanically. The optical throughput $I_2$ is optimised by changing the temperature of the device appropriately, hence the optimum beam coupling angle. In the latter case, the optical throughput $I_2$ may further be dynamically controlled by an electronic feedback loop which controls the temperature of the device to compensate for changes in coupling angle, to laser wavelength changes, for laser beam direction variations, for mechanical movement, and/or changes in the incident power $I_1$.

The integrated optic device referred to above may be employed, for example, in a solid state deflector for a laser printer or copier. A laser printer is a high speed printer which basically comprises means to convert the characters etc. of an input text to be printed to a suitable serial data stream form, a deflection control signal, for example a line scan voltage ramp, being generated in synchronism with the serial data stream; a laser beam source; laser modulation drive circuits which convert the logic pulses in the serial data stream to suitable voltage and current levels for either driving a modulator for a CW (continuous wave) laser or driving the modulation of a semiconductor laser directly; a line scan laser deflector driven in accordance with the line scan voltage ramp referred to above, for example; and optics to focus the deflected laser beam to write on a photo-sensitive surface, such as a rotating selenium drum, to produce an electrostatic pattern of the text character, for example. The drum picks up powdered ink on the electrostatic pattern and deposits it on to plain paper. The ink is set in a e.g. pressure process to produce the printed copy.

The laser deflector may be formed by a surface acoustic wave device which comprises an integrated optic device to which a laser beam is coupled by a method as described above, that is a lithium niobate substrate on which a surface layer of a higher refractive index than the substrate is produced. The surface layer comprises an optical waveguide for the laser beam which is coupled to and from this layer by, for example, separate prismatic coupling assemblies which, together with appropriate optics, interface to the laser source and the photo-sensitive surface, respectively. Surface transducers are arranged to generate acoustic waves in the surface layer waveguide, causing the refractive index of the layer to be modulated and so produce a diffraction grating. Optimisation of the drive power to these transducers and therefore the depth of index modulation achieved, together with the interaction length of the grating region, which can then be scanned by controlling the drive frequency and hence the grating period. The grating may comprise a linearly controlled deflection grating or, alternatively, a travelling chirp grating. Whereas prism coupling has been referred to, the deflector may alternatively employ grating coupling for coupling the laser beam into the waveguide.

**Claims**

1. An integrated optic device comprising an acoustic surface wave device (1, 2) having a waveguide (2) and transducers for causing acoustic surface waves in response to an electrical signal applied thereto, and an optical coupler (3, 4) for coupling an incident light beam into the waveguide (1, 2) aty an angle ($\theta$), characterised by device mounting means adapted to control the temperature of the integrated optic device whereby to compensate for variations in the beam coupling angle and/or for variations in the beam angle of incidence and/or for variations in the power of the incident light beam to stabilize the optical throughput of the waveguide (2).

2. A device as claimed in claim 1, wherein the optical coupler (3) is a prism coupler.

3. A device as claimed in claim 1 or 2, further comprising electroic feedback loop means whereby to control the device temperature dynamically and optimise the optical throughput of the waveguide (2) (Fig. 3).

4. A device as claimed in claim 1, 2 or 3, wherein the mounting means comprise a thermoelectric heat pump.

5. A device as claimed in claim 3, wherein the feedback loop means comprise means (5) to monitor the portion ($R_1$, $I_3$) of the optical beam which is reflected by the optical coupler (3, 4) rather than coupled to the waveguide (2) and means (13) to control the temperature of the device whereby to minimise the reflected portion of the optical beam.

6. A device as claimed in claim 3, wherein the feedback loop means comprise means to monitor the portion of the optical beam ($J_2$) as

coupled into the waveguide, or a beam proportional thereto, and means to control the temperature of the device whereby to control the monitored portion.

7. A device as claimed in claim 1, 3 or claim 4, wherein the device temperature is adjusted to each of a number of values, the portion of the incident optical beam coupled to the waveguide is measured for each temperature value and wherein the device temperature is then set to the value corresponding to a predetermined value for the said portion.

8. Apparatus for displaying or recording information with an integrated optic device according to any of the preceding claims including a light beam source, means for modulating the light beam with the information, means for coupling the modulated light beam to the waveguide at an angle, means for generating a light beam deflection control signal to be applied to the transducers in use of the apparatus whereby to scan the coupled light beam, means to couple the scanned light beam to a light sensitive surface for recordal or display of the information thereon, and means for causing relative movement between the light sensitive surface and the beam transverse to the direction of scanning.

## Patentansprüche

1. Integriert-optisches Bauelement mit einer Einrichtung (1, 2) zur Erzeugung von akustischen Oberflächenwellen, die einen Wellenleiter (2) und Wandler zur Erzeugung von akustischen Oberflächen bei Anlegen eines elektrischen Signals enthält, und mit einem optischen Koppler (3, 4) zur Einkopplung eines einfallenden Lichtstrahls in den Wellenleiter (1, 2) unter einem Winkel (0), dadurch gekennzeichnet, daß Mittel vorgesehen sind, mit denen die Temperatur des integriert-optischen Bauelements geregelt wird, so daß Schwankungen des Lichtstrahleinkopplungswinkels und/oder Schwankungen des Lichteinfallswinkels und/oder Schwankungen der Intensität des einfallenden Lichtstrahls ausgeglichen werden um die optische Durchgangsleistung durch den Wellenleiter (2) zu stabilisiern.

2. Bauelement nach Anspruch 1, dadurch gekennzeichnet, daß der optische Koppler ein Prismenkoppler (3) ist.

3. Bauelement nach Anspruch 1 oder Anspruch 2, dadurch gekennzeichnet, daß weiterhin eine elektronische Rückkopplungsschleife vorgesehen ist zur dynamischen Regelung der Bauelementtemperatur und zur Optimierung der optischen Durchgangsleitung durch den Wellenleiter (2) (Fig. 3).

4. Bauelement nach einem der Anpsrüche 1, 2 oder 3, dadurch gekennzeichnet, daß die Mittel zur Temperaturregelung Träger des Bauelements sind und eine thermoelektrische Wärmepumpe enthalten.

5. Bauelement nach Anspruch 3, dadurch gekennzeichnet, daß die Rückkopplungsschleife Mittel (5) enthält, mit denen der Teil des Lichtstrahls (R1 $I_3$), der von dem optischen Koppler (3, 4) reflektiert und nicht in den Wellenleiter (2) eingekoppelt wird, überwacht wird, und daß die Mittel die Temperatur des Bauelements so regeln, daß der reflektierte Anteil des Lichtstrahls minimiert wird.

6. Bauelement nach Anspruch 3, dadurch gekennzeichnet, daß die Rückkopplungsschleife Mittel enthält, mit denen der Anteil ($I_2$) des Lichtstrahls, der in den Wellenleiter eingekoppelt wird oder ein hierzu proportionaler Lichtstrahl überwacht wird, und daß sie weiterhin Mittel enthält, mit denen die Temperatur des Bauelements geregelt wird, um hierdurch den überwachten Strahlungsanteil zu regeln.

7. Bauelement nach Anspruch 1, 3 oder 4, dadurch gekennzeichnet, die Bauelementtemperatur für eine Anzahl Werte geeicht wird, daß die Anteile des einfallenden Lichtstrahls, die in den Wellenleiter eingekoppelt werden, für jeden dieser Werte gemessen werden und daß die Bauelement-temperatur dann auf den Wert eingestellt wird, der einem vorbestimmten Wert für den jeweiligen Anteil entspricht.

8. Gerät zur Wiedergabe oder Aufzeichnung von Informationen mit einem integriert-optischen Bauelement nach einem der vorhergehenden Ansprüche, mit einer Lichtquelle, mit Mitteln zur Modulation des Lichtstrahls mit der Information, mit Mitteln zur Einkopplung des modulierten Lichtstrahls in den Wellenleiter unter einem vorgegebenen Winkel, mit Mitteln zur Erzeugung eines Steuersignals zur Ablenkung des Lichtstrahls, welches den Wandlern zugeführt wird, wodurch der eingekoppelte Lichtstrahl geschwenkt wird, mit Mitteln zur Kopplung des geschwenkten Lichtstrahls auf eine lichtempfindliche Oberfläche zur Wiedergabe oder Aufzeichnung der Information und mit Mitteln zur Erzeugung einer Relativbewegung zwischen der lichtempfindlichen Oberfläche und dem Lichtstrahl quer zur Richtung der Strahlschwenkung.

## Revendications

1. Dispositif optique intégré comprenant un dispositif à ondes acoustiques de surface (1, 2) ayant un guide d'ondes (2) et des transducteurs pour engendrer des ondes acoustiques de surface en réponse à un signal électrique qui leur est appliqué, ainsi qu'un coupleur optique (3, 4) pour coupler un faisceau de lumière incidente dans le guide d'ondes (1, 2) sous un certain angle (θ), caractérisé par des moyens de montage du dispositif arrangés pour commander la température du dispositif optique intégré de manière à compenser les variations dans l'angle de couplage du faisceau et/ou des variations dans l'angle d'incidence du faisceau et/ou des variations dans la puissance du faisceau de lumière incident, pour stabiliser la puissance optique transmise par le guide d'ondes (2).

2. Dispositif selon la revendication 1, dans lequel le coupleur optique (3) est un coupleur à prisme.

3. Dispositif selon la revendication 1 ou 2, comprenant en outre une boucle de contre-réaction électronique de manière à commander dynamiquement la température du dispositif et à optimiser la transmission optique du guide d'onde.

4. Dispositif selon l'une des revendications 1 à 3, dans lequel les moyens de montage comprennent une pompe thermo-électrique.

5. Dispositif selon la revendication 3, dans lequel la boucle de contre-réaction comprend des moyens pour superviser la partie $I_3$ du faisceau optique qui est réfléchie par le coupleur optique (3, 4), plutôt que celle qui est couplée au guide d'onde (2), et des moyens (13) pour commander la température du dispositif de manière à minimaliser la partie réfléchie du faisceau optique.

6. Dispositif selon la revendication 3, dans lequel la boucle de contre-réaction comprend des moyens pour superviser la partie du faisceau optique (I2) qui est couplée au guide d'ondes, ou un faisceau proportionnel à celle-ci, et des moyens pour commander la température du dispositif de manière à agir sur ladite partie supervisée.

7. Dispositif selon l'une des revendications 1 à 4, dans lequel la température du dispositif est réglée selon chacune de plusieurs valeurs, la partie du faisceau optique incident couplée au guide d'ondes est mesurée pour chaque valeur de température et dans lequel la température du dispositif est fixée à la valeur correspondant à une valeur prédéterminée de ladite partie.

8. Appareil d'affichage ou d'enregistrement d'information incluant un dispositif optique intégré selon l'une quelconque des revendications précédentes comprenant une source de faisceau lumineux, des moyens pour moduler le faisceau lumineux par l'information, des moyens pour coupler le faisceau lumineux modulé au guide d'ondes sous un certain angle, des moyens pour engendrer des signaux de commande de déviation du faisceau lumineux destinés aux transducteurs utilisés dans le dispositif, de manière à engendrer un balayage du faisceau lumineux couplé, des moyens pour coupler le faisceau lumineux à balayage avec une surface sensible à la lumière, aux fins d'enregistrement ou d'affichage d'information, ainsi que des moyens pour engendrer un mouvement relatif entre la surface sensible à la lumière et le faisceau, transversalement par rapport à la direction du balayage.

## Fig.1.

## Fig.2.

# Fig.3.

*Fig.4.*

$I_3$ →→→ PHOTODIODE → AMPLIFIER

AMPLIFIER → SAMPLE AND HOLD

SAMPLE AND HOLD → ANALOGUE TO DIGITAL CONVERSION

ANALOGUE TO DIGITAL CONVERSION → MICROPROCESSOR

MICROPROCESSOR → DIGITAL TO ANALOGUE CONVERSION

MICROPROCESSOR ↕ MICROPROCESSOR PERIPHERALS AND CONTROLS

DIGITAL TO ANALOGUE CONVERSION → TEMPERATURE CONTROLLER

TEMPERATURE CONTROLLER → TEMPERATURE OF I.O. DEVICE

3